**Europäisches Patentamt**

**European Patent Office**

**Office européen des brevets**

(19)

(11) **EP 1 009 099 A2**

(12) # EUROPEAN PATENT APPLICATION

(43) Date of publication:
**14.06.2000   Bulletin 2000/24**

(51) Int Cl.7: **H04B 1/04**, H04H 1/00

(21) Application number: **99830765.6**

(22) Date of filing: **09.12.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority:  **11.12.1998  IT   AN980055**<br><br>(71) Applicant: **Itelco - S.p.A.**<br>**Orvieto (TR) (IT)** | (72) Inventors:<br>• **Fumi, Eugenio**<br>  **Orvieto (TR) (IT)**<br>• **Andreoli, Sante**<br>  **Pescara (IT)**<br><br>(74) Representative: **Baldi, Claudio**<br>**Piazza Ghislieri, 3**<br>**60035 Jesi (Ancona) (IT)** |

(54)   **Method for transmitting several broadcast signals with a single transmitter**

(57)     The present invention concerns a technique to transmit several broadcast signal using only one irradiating system for the entire signals ensemble. To reach such goal this invention is based on a suitable arrangement of the signals to feed the final amplification chain and eventually on a method to compensate the non-linear distortions introduced by the amplification chain on the said signal. In its easiest form the invention is composed of:

- a multiplexer with input that is represented by the signals which are not yet, or are only partially, amplified and which, eventually, are to be shifted to their final transmitting frequency;
- a compensation technique of the non-linear distortions;
- an amplification chain that is positioned just before the irradiating system.

Fig. 4

Printed by Jouve, 75001 PARIS (FR)

**Description**

The present invention concerns a technique to transmit several broadcast signals using only one irradiating system for the entire signals ensemble.

The system has its preferred, but not limited, utilisation in diffusion systems for TV and radiophone signals. However, actually, the proposed technique can also be used in other application fields, and it is especially valuable for systems that require the transmission of several signals from a single radio station, as in a multimedia diffusion system.

The known broadcast transmitting systems, in their easiest architecture, are typically characterised, for each signal to be transmitted, by:

- one or more systems that realise the shifting of the signal up to the transmission frequency, hereafter named frequency shifters for easiness of description;
- eventually a system that compensates the nonlinear distortions introduced by the amplification chain on the said signal, hereafter named lineariser for easiness of description;
- a suitable amplification chain to feed the irradiating system with an adequate signal power;
- an irradiating system, that is composed, in its easiest form, of an antenna and of all the systems required to connect the amplification chain output to the said antenna, with the potential inclusion of some filtering stages. In other situations the irradiating system is shared by several signals through the use of appropriate combiners as described later.

Usually the antennas, because of well known technical reasons, are either placed at the top of trellises or located in transmitting sites that, because of their geographical position, make the installation difficult and expensive. As a consequence it is convenient to use the same irradiating system to transmit several signals, provided that the working frequency band of the antenna is wide enough to handle the overall signal obtained by the frequency multiplexing of the said signals.

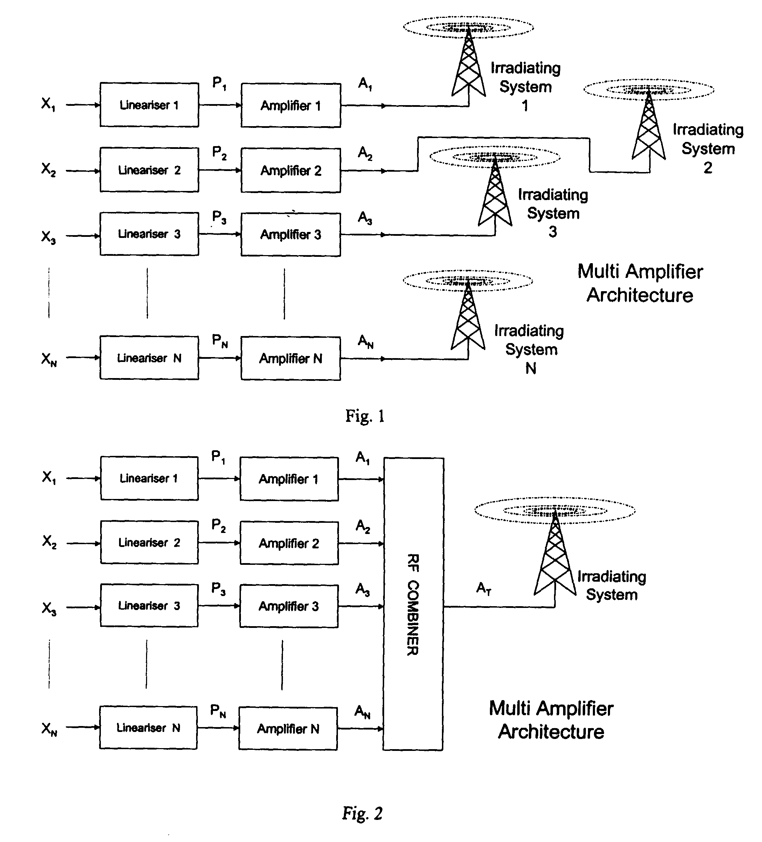

Some of the known systems used so far to transmit N signals on N different carriers are characterised, for each signal, by one or more frequency shifters, eventually a lineariser, an amplification stage, and an irradiating system. This architecture is shown in Fig.1, which shows neither the frequency shifters (eventually positioned before each represented block) nor the mid amplification stages that could be used.

The critical characteristics of such an architecture are:

- it is complex and expensive because it requires an irradiating system for each signal;
- it is complex and expensive because it requires a complete amplification chain for each transmitted signal;
- it also requires the utilisation and the tuning of a lineariser for each transmitted signal because each amplification chain is characterised by its own non-linear distortion.

Alternatively, in order to transmit N signals on N frequency carriers, it is possible to use a system that it is characterised, for each transmitted signal, by one or more frequency shifters and by an amplification chain, which are followed by one sole RF combiner and one sole irradiating system. This architecture is shown in Fig.2, which for simplicity does not outline the frequency shifters that may be positioned before each depicted block and it does not outline the intermediate amplification chains that could be eventually used. This architecture exhibits the following critical aspects:

- it is complex and expensive because it requires a complete amplification chain for each of the transmitted signals;
- it requires the utilisation and the tuning of a lineariser for each transmitted signal because each amplification chain is characterised by its own non linear distortion;
- it reduces the available power for the irradiating system with respect to the signal power at the amplification stages output because of the high insertion losses that characterise the RF combiner.
- the RF combiner is critical to realise, and consequently it is almost expensive especially when the N input signals are multiplexed on adjacent frequency channels. Indeed, when a RF device combines N signals with each signal positioned on a different frequency band, it introduces interference between those signals because of the not perfect isolation between the many input gates. This problem becomes as more significant as the input signals are closer in the frequency domain and it makes the mechanical complexity of the combiner, along with its size and costs, increase.

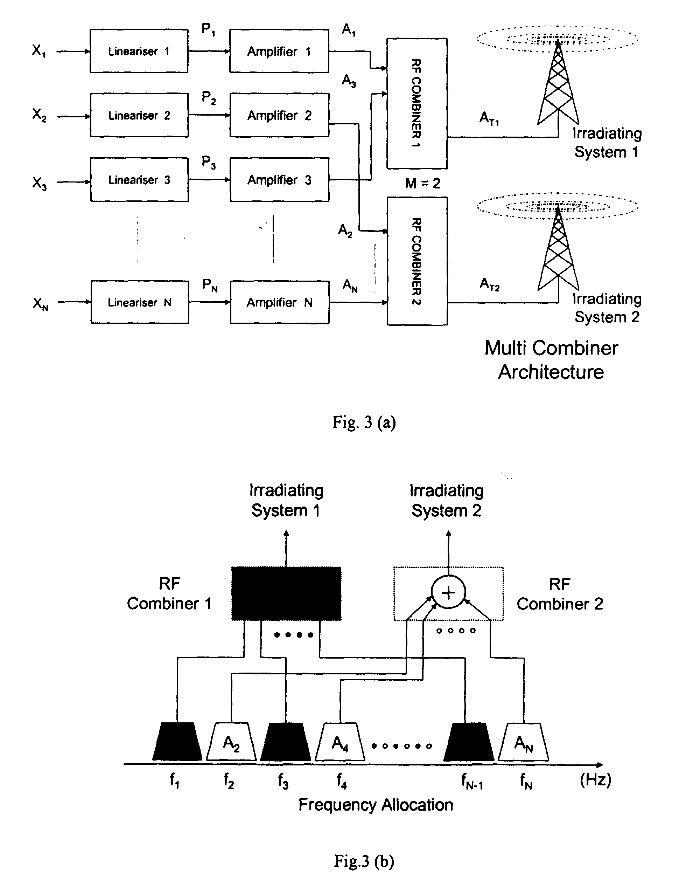

In other known solutions, the said transmission of N signals on N frequencies is obtained by one or more frequency shifters, eventually by a lineariser and by an amplification chain for each one of the transmitted signals, followed by M RF combiners, each one connected to the respective irradiating system: the N signals in this architecture are divided in M groups and each group is characterised by signals that are positioned in interleaved frequency bands. The said architecture is depicted in Fig.3(a) for M=2 and, for simplicity, it does not show the frequency shifters eventually positioned between each one of the depicted blocks and it does not show the mead amplification stages that could be introduced. Fig.3(b) points out the strategy to divide the frequency spectrum in interleaved bands. This architecture reduces the interference, which was introduced by the RF combiners on the transmitted signals, thanks to the adequate frequency separation between the signals at the input of each combiner. As a consequence it also reduces the realisation complexity of each RF combiner even if it leaves unsolved all the other critical aspects of the technical solution shown in Fig.2. Moreover this technique, making use of several antennas (M<= N), does not solve the problem of their physical and geographical location and it sensibly increases the costs, especially in a broadcast scenario.

The aim of the present invention is to realise an improved technique that overcomes the impairments and the critical aspects that characterise the said known techniques and that in particular eliminates the expensive and huge RF combiner systems at the output of the signals amplifiers.

Another object of this invention is to define a linearising strategy matched to the proposed architecture. The invention reaches the above goals by a suitable arrangements of the signals to be transmitted, and eventually by using a compensation technique of the non linear distortions introduced by the amplification stages, in order to use only one irradiating system for the signals ensemble. The invention, in reference to the plans herewith enclosed, is composed of:

- a multiplexer with inputs that are represented by the said signals, which are not yet, or only partially, amplified and which still are to be shifted to their final transmitting frequency;
- a lineariser that could be eventually employed;
- a unique amplification chain that is positioned just before the irradiating system.

The above invention will be described in detail in the following with reference to the preferred, but not limited, implementation and by the help of the included figures.

A signal x(t) that is modulated at a frequency $f_o$ can be analytically represented by $x(t) = R_x(t)\cos\{\omega_0 t + \theta_x(t)\}$ where $\omega_0 = 2\pi f_0$ and where $R_x(t)$ and $\square_x(t)$ respectively represent the

instantaneous envelope and phase of the modulating signal. The frequency $f_o$ can be either the final transmission frequency (RF) or an intermediate frequency (IF).

The signal can be equivalently represented at baseband by the complex signal $\hat{x}(t)$ defined in polar notation as

$$\hat{x}(t) = R_x(t)\cdot e^{j\theta_x(t)}$$

or equivalently by its cartesian notation as

$$\hat{x}(t) = x_I(t) + jx_Q(t)$$

where $x_I(t)$ and $x_Q(t)$ are respectively the so-called In-phase and Quadrature signal components.

The analytical relationship between the RF (or IF) modulated signal and its complex baseband equivalent is expressed by

$$x(t) = \mathrm{Re}\left\{\hat{x}(t)\cdot e^{j\omega_0 t}\right\} = x_I(t)\cos\omega_0 t - x_Q(t)\sin\omega_0 t$$

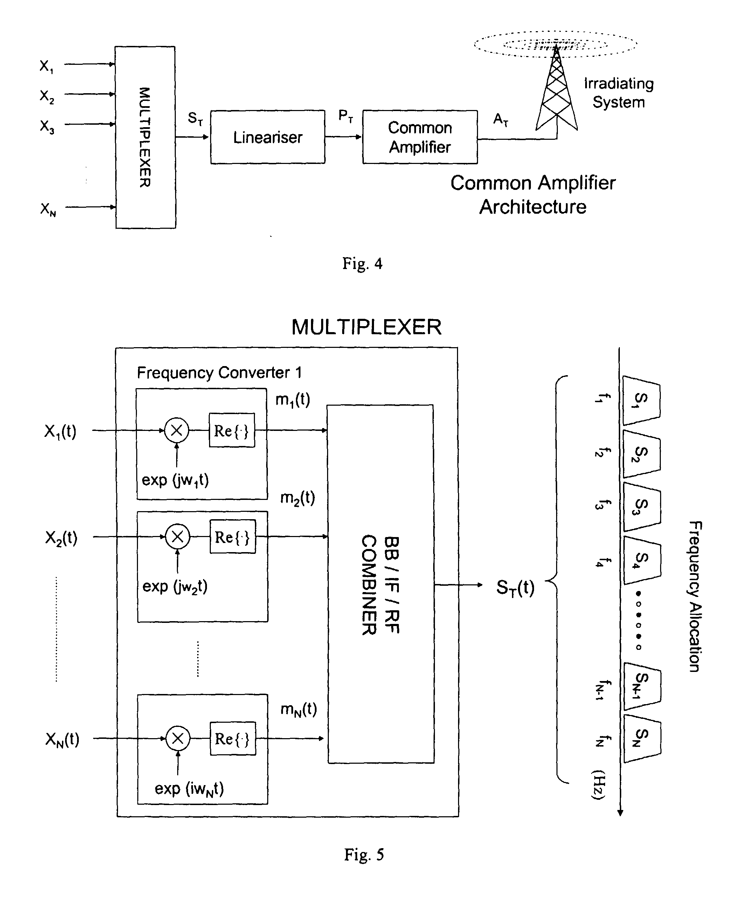

According to the previous notation each one of the $X_K$ input signals of Fig.4 is a signal that can be expressed by

$$X_K(t) = X_{KI}(t)\cos(w_k t) - X_{KQ}(t)\sin(w_k t)$$

if it represents an IF/RF signal or by

$$X_K(t) = X_{KI}(t) + jX_{KQ}(t)$$

if it represents a baseband signal.

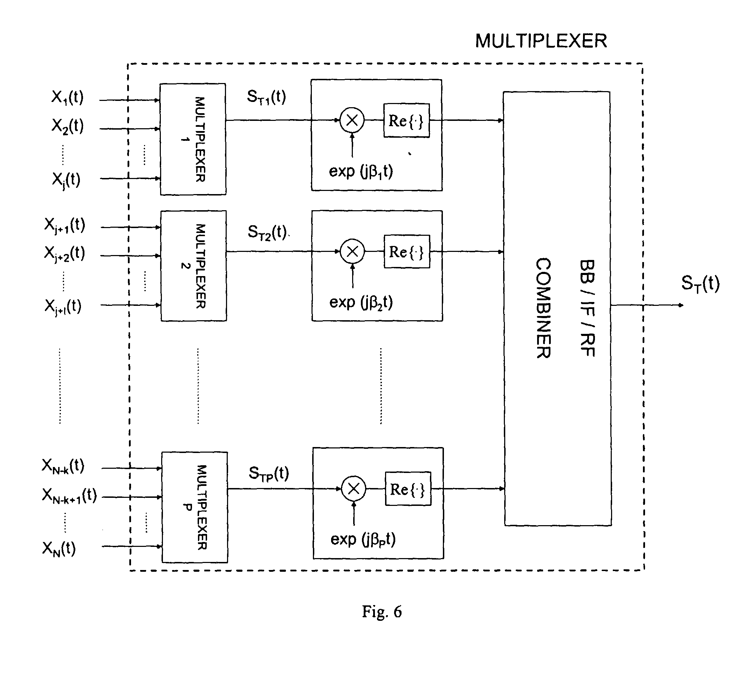

The multiplexer can realise the frequency multiplexing of the N signals at its inputs by different architectural schemes which work on different frequency bands. In this sense its N input signals $X_K$ can be either modulated or at baseband. Consequently Fig.5 represents the more general architecture of a multiplexer where the frequency shifters have the role to allocate the signals on adjacent frequency bands. In order to meat this objective the angular frequency $w_k$ are chosen in such a way that input signal $X_K$ would be shifted to the frequency $f_k = w_k/2\pi$ that is associated to one of the N output channels according to a frequency allocation plan like the one shown in Fig.5. The BB/IF/RF combiner shown in Fig.5 has the only role to add the signal together without performing any frequency shifting. The said BB/IF/RF combiner plays a role conceptually similar to the combiner of the known systems of Fig.2 and Fig.3, but it is easier and cheaper to implement. Indeed, as suggested by the name, it can also work at lower frequencies (eventually also at baseband by using digital technology) handling signals that are characterised by a considerable lower power. It can be observed that the said multiplexer could be also realised by joining together the action of several multiplexers as shown in Fig.6. The signal $S_T$ at the multiplexer output is transmitted. by using only one common amplifier chain after some other frequency shifting that could be eventually realised. These frequency shiftings, however, have the only role to shift together all the N signals from one frequency band to another without changing their reciprocal positions in respect of the frequency allocation imposed by the multiplexer. The non-linear distortions introduced by the power amplifier can be counteracted by a lineariser that can be implemented by means of different techniques and technological realisations. Anyway, in all situations, the lineariser must be placed between the multiplexer and the amplifier. The multiplexer output could require a frequency shifting if the device works at a different frequency with respect to that of the amplifier. The amplifier output is finally transmitted by a unique irradiating system. A system that transmits several signals by using only one common amplifier chain, with the transmitted signal that are previously multiplexed at baseband or at IF/RF, is shown in Fig.4. For simplicity, the frequency shifters and the mead amplification stages, which may be eventually positioned before each depicted block, are not outlined in Fig.4.

This system is particularly effective when each of the transmitted signals is characterise by a multicarrier modulation. In this case the signal envelope is highly variable and it is characterised by a Rayleigh probability density function. The sum of several multicarrier signals however is itself a multicarrier signal with an envelope described by the same kind of distribution. As a consequence the common amplification chain of Fig.5 can work with the same power back-off of each single amplification chain of Fig.1-2-3(a). Indeed, if its maximum output power is equal to the sum of the maximum output power of each single amplification chain, the common amplification chain can obtain the same signal to intermodulation power ratio for the same coverage area of the transmitter. In a non-restricting application all the $X_k$ signals to be transmitted could be analogic television signals.

In another non-restricting application all the $X_k$ signals to be transmitted can be digital television signals.

In another non-restricting application the $X_k$ signals can be a mixing of analogic and digital television signals in any combination.

By means of what previously said the invention allows:

- to transmit several signals by only one irradiating system with a consequent reduction of costs and installation impairments.
- the elimination of the RF combiner at the output of the amplifiers, with a consequent reduction of sizes, costs and power penalties, and the interference between the signals.
- to use only one amplification chain for all the signal to be transmitted with a consequent reduction of costs and sizes.
- to eventually utilise only one lineariser for the entire signal ensemble to transmitted.

The above description has not to be considered restrictive but extensible to cover all the variations that a technician can face.

## Claims

1.  A technique for the transmission of several broadcast signals with only one irradiating system, characterised by the fact of employing a common amplifier to transmit the said signals that are combined by one or more multiplexers, whose inputs are the said signals that are still not or only partially amplified and that eventually are still to be frequency shifted, by one or more frequency shifters, to the final transmitting frequency

2.  According to claim 1, a technique for the transmission of several broadcast signals with only one irradiating system characterised by a lineariser positioned between the said multiplexer and the said common amplifier

3.  According to claims 1 and 2, a technique for the transmission of several broadcast signals with only one irradiating system characterised by the fact that the output of the said multiplexer is shifted at the working frequency of the said lineariser by one or more the said frequency shifters.

4.  According to claims 1 and 2, a technique for the transmission of several broadcast signals with only one irradiating system characterised by the fact that the output of the said lineariser is shifted to the working frequency of the said common amplifier by one or more of the said frequency shifters.

5.  According to claims 1 and 2, a technique for the transmission of several broadcast signals with only one irradiating system, characterised by the fact that the output of the said multiplexer is shifted at the working frequency of the said lineariser by one or more the said frequency shifters and the output of the said lineariser is shifted to the working frequency of the said common amplifier by one or more of the said frequency shifters.

6.  According to claims 1,2 and 5, a technique for the transmission of several broadcast signals with only one irradiating system characterised by the use of several multiplexers and by the fact that each one of them works on different frequencies.

Fig. 1

Fig. 2

Fig. 3 (a)

Fig.3 (b)

Fig. 4

MULTIPLEXER

Fig. 5

Fig. 6